# EUROPÄISCHE PATENTANMELDUNG

(11) **EP 0 934 978 A1**
(43) Veröffentlichungstag der Anmeldung: **11.08.1999**
(21) Anmeldenummer: 99101834.2
(22) Anmeldetag: 28.01.1999
(51) Int. Cl.: C08L 75/04, C08L 83/04, C08K 5/42, D01F 6/70, D01F 1/09, D06M 13/256

(54) **Antistatisch ausgerüstete Polyurethane und Elastan-Fasern**

(30) Priorität: 09.02.1998 DE 19805130
(71) Anmelder: Bayer Aktiengesellschaft, 51368 Leverkusen (DE)
(72) Erfinder: Hütte, Stephan, Dr., 51065 Köln (DE)

(57) **Zusammenfassung**

Die Erfindung betrifft Polyurethanzusammensetzungen und speziell daraus resultierende elastische Polyurethan-Fasern, die ein Dialkylsulfosuccinat als Additiv enthalten und/oder mit einem Polydialkylsiloxan, einem Dialkylsulfosuccinat und gegebenenfalls einem Mineralöl, aviviert sind. Bedingt durch den Zusatz oder die Präparation der Polyurethanzusammensetzung bzw. der elastischen Polyurethan-Faser mit Dialkylsulfosuccinat wird eine elektrostatische Aufladung des Polymeren unterdrückt, wie sie beispielsweise bei der Kettwirkverarbeitung von Polyurethan-Fasern auftritt.

## Beschreibung

Die Erfindung betrifft Polyurethanzusammensetzungen und speziell daraus resultierende elastische Polyurethan-Fasern, die ein Dialkylsulfosuccinat als Additiv enthalten und/oder mit einer Mischung, bestehend aus einem Polydialkylsiloxan, einem Dialkylsulfosuccinat und gegebenenfalls einem Mineralöl aviviert sind. Bedingt durch den Zusatz oder die Präparation der Polyurethanzusammensetzung bzw. der elastischen Polyurethan-Faser mit Dialkylsulfosuccinat wird eine elektrostatische Aufladung des Polymeren unterdruckt, wie sie beispielsweise bei der Kettwirkverarbeitung auftritt. Die elektrostatische Aufladung kann im Extremfall bis zu Funkenflug aufgrund elektrischer Entladungen führen.

Der im Rahmen der vorliegenden Erfindungsbeschreibung verwendete Ausdruck Faser umfaßt Stapelfasern und kontinuierliche Filamente, die durch im Prinzip bekannte Spinnverfahren wie das Trockenspinnverfahren, das Naßspinnverfahren oder das Schmelzspinnverfahren hergestellt werden können.

Diese Spinnverfahren sind beispielsweise beschrieben in Polyurethan-Elastomerfasern, H. Gall und M. Kausch in Kunststoff-Handbuch 7, Polyurethane, Herausgeber: G. Oertel, Carl Hanser Verlag München Wien, 1993, Seite 679 bis 694.

Elastische Polyurethanfasern aus langkettigen synthetischen Polymeren, die zu wenigstens 85 % aus segmentierten Polyurethanen auf Basis von z.B. Polyethern, Polyestern und/oder Polycarbonaten aufgebaut sind, sind gut bekannt. Garne aus solchen Fasern werden zur Herstellung von Flächenwaren bzw. Geweben oder Stoffen verwendet, die ihrerseits unter anderem für Miederwaren, Strümpfe und Sportbekleidung wie z.B. Badeanzüge bzw. Badehosen geeignet sind. Eine Form der Verarbeitung von Polyurethan-Fasern zu Flächenwaren ist das Kettwirkverfahren. Bei hoher Verarbeitungsgeschwindigkeit im Kettwirkprozeß kann es zu Verdrallungen von Fadenscharen kommen, wodurch der Verarbeitungsprozeß erheblich gestört wird. Hierdurch bedingt kann es schließlich zu einem Maschinenstillstand kommen.

Eine Ursache für die Störungen bei der Kettwirkverarbeitung sind elektrostatische Aufladungen des Fasermaterials. Diese können in einigen Fällen aufgrund starker elektrischer Entladung sogar bis hin zum Funkenflug führen. In praktischer Hinsicht können diese Störungen bei der Kettwirkverarbeitung nicht akzeptiert werden, da eine Abhilfe heute durch eine unerwünschte Reduzierung der Verarbeitungsgeschwindigkeit oder eine aufwendige Installation von Sprühstäben an den Verarbeitungsmaschinen zur Ableitung der elektrischen Ladung erreicht wird.

Eine Lösung des Problems der elektrostatischen Aufladung bei der Verarbeitung von Polyurethan-Fasern ist in der japanischen Patentanmeldung JP 9-49 167 beschrieben. Darin werden Avivagen (Präparationen) offenbart, die eine Mischung aus Salzen von Alkanolammonium- und Alkalimetall-Phosphorsäureestern als zur Ausbildung der antistatischen Eigenschaft der Fasern notwendige Additive enthalten. Der Nachteil der in dieser Schritt beschriebenen Mischung aus Salzen von Phosphorsäureestern ist eine Beschränkung der Löslichkeit der Salze in dem Präparationsöl, bestehend aus einer Mischung von Polydimethylsiloxanen und Mineralölen. Dadurch wird bei dem Auftragen der Präparation auf die Polyurethan-Faser eine spezielle und technisch aufwendige Präparationstechnik notwendig, um einen gleichmäßigen Präparationsauftrag sicherstellen zu können. Ein weiterer Nachteil der bekannten Präparation ist der Gehalt von Salzen von Phosphorsäureestern in der Präparation, die bei der Einleitung in Produktionsabwasser die Funktionsweise von biologisch arbeitenden Kläranlagen einschränken können. Hierdurch bedingt fallen bei der Weiterverarbeitung der Polyurethan-Faser in beispielsweise Wasch- und Färbeprozessen große Mengen von gesondert zu entsorgendem salzhaltigem Abfall an.

In der Patentschritt US 32 96 063 wird zum Schutz vor elektrostatischer Aufladung von Polyurethan-Fasern die Verwendung einer Präparation beschrieben, die aus einer Mischung von niedrigviskosen Polydimethylsiloxanen oder Mineralölen und Polyamylsiloxan besteht. Das beschriebene Präparationssystem hat jedoch den Nachteil, daß der Schutz vor elektrostatischer Aufladung nicht ausreichend ist.

In den Patentschriften US 42 96 174 und US 51 35 575 sind für die Präparation von Polyurethan-Fasern Mischungen aus Polydimethylsiloxan, Polyamylsiloxan und Salze von Fettsäuren beschrieben. Die beschriebenen Präparationssysteme haben jedoch auch den Nachteil, daß der Schutz vor elektrostatischer Aufladung nicht ausreichend ist.

Aus der Europäischen Offenlegungsschrift EP 493 766 A1 ist ein Präparationssystem bestehend aus einem Aminopolysiloxan und Dialkylsulfosuccinat bekannt. Diese wasserlösliche Mischung soll Acrylfasern bei ihrer Weiterverarbeitung zu Kohlenstofffasern vor Aufladung bewahren und wird bei der Oxidierung und Graphitierung der Acrylfasern zu Kohlenstoffasern vollkommen zersetzt.

Das beschriebene Präparationssystem hat jedoch den Nachteil, daß die Aminogruppen des Aminopolysiloxans mit der Polyurethanzusammensetzung reagieren können. Hierdurch kann es zu Anquellung von beispielsweise Elastan-Fasern kommen, was sich nachteilig auf die Verarbeitungseigenschaften der Fasern auswirkt. Desweiteren ist die vor der Färbung einer Elastan-Faser notwendige Entfernung der Präparation durch Waschen erschwert bzw. nicht möglich. Hierdurch wird eine gleichmäßige Färbung der Fasern erschwert oder sogar verhindert. Ein gravierender Nachteil des beschriebenen Präparationssystems ist, daß Aminopolysiloxane inhalationstoxisch sein können. Sowohl die Präparierung von Fasern als auch die Weiterverarbeitung müssen demzufolge in besonders aufwendigen verschlossenen Anlagen erfolgen. Für die in der EP 493 766 beschriebene Weiterverarbeitung zu Kohlefasern ist dieser Nachteil bei der Herstellung des Zwischenproduktes in Kauf genommen.

Der Erfindung liegt die Aufgabe zugrunde, eine Polyurethan-Faser zur Verfügung zu steilen, die in ihren antistatischen Eigenschalten gegenüber dem Bekannten verbessert ist. Durch die Verbesserung der Antistatik soll erreicht werden, daß bei der Verarbeitung zu Kettwirkwaren, welche zur Herstellung von Miederwaren oder Badebekleidung eingesetzt werden, der Verarbeitungsprozeß nicht aufgrund von elektrostatischer Aufladung beeinträchtigt ist.

Die Aufgabe wird erfindungsgemäß dadurch gelöst, daß der Polyurethanzusammensetzung eine wirksame Menge Dialkylsulfosuccinat als antistatisch wirksame Substanz zugesetzt und/oder diese in geeigneter Form als Präparation von außen auf die elastische Faser aufgetragen wird.

Gegenstand der Erfindung ist eine Polyurethanzusammensetzung mit einem verbesserten antistatischen Verhalten, dadurch gekennzeichnet, daß sie aus
A) von 99,98 bis 65 Gew.-%, insbesondere von 99,95 bis 80 Gew.-%, insbesondere bevorzugt von 99,9 bis 85 Gew.-% Polyurethan,
B) von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 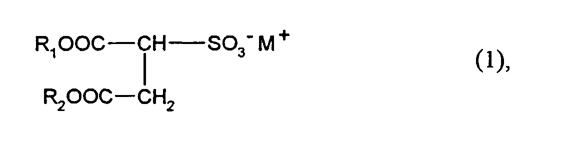 wobei
   - R₁ und R₂: unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
   - M⁺: H⁺, Li⁺, Na⁺, K⁺ oder NH₄⁺ ist,
   und
C) von 0 bis 20 Gew.-%, insbesondere von 0 bis 15 Gew.-% Zusatzstoffe besteht.
   Bedingt durch eine Verbesserung des elektrostatischen Verhaltens der Polyurethan-Fasern kann beispielsweise eine Verarbeitung der Fasern über das Kettwirkverfahren verbessert werden. Weiterer Gegenstand der Erfindung sind auch antistatisch ausgerüstete Polyurethanfasern auf Basis von thermoplastischem Polyurethan oder einem Polymeren mit wenigstens 85 Gew.-% segmentiertem Polyurethan enthaltend
   von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 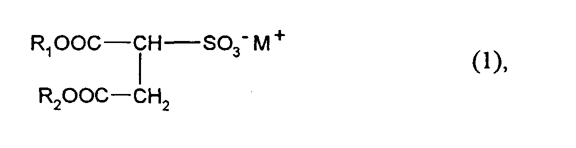 in der
   - R₁ und R₂: unabhängig voneinander gleich oder verschieden für Wasserstoff oder eine Alkylgruppe mit 1 bis 30 Kohlenstoffatomen, bevorzugt für eine Alkylgruppe mit 4 bis 18 Kohlenstoffatomen stehen und
   - M⁺: H⁺, Li⁺, Na⁺, K⁺ oder NH₄⁺ ist,
   wobei das Dialkylsulfosuccinat in der Faser, insbesondere fein dispergiert ist, und/oder auf der Faseroberfläche verteilt ist.
   Die Herstellung der Dialkylsulfosuccinate kann wie in der Literaturschrift C. R Carly, Ind. Eng. Chem., Vol. 31, Seite 45, 1939 beschrieben erfolgen.
   Spezielle bevorzugte Dialkylsulfosuccinate sind Natriumdiisobutylsulfosuccinat, Natriumdioctylsulfosuccinat, Natriumdihexylsulfosuccinat, Natriumdiamylsulfosuccinat und Natriumdicyclohexylsulfosuccinat.
   Insbesondere bevorzugte Dialkylsulfosuccinate sind Natriumdioctylsulfosuccinat und Natriumdihexylsulfosuccinat.
   Ganz besonders bevorzugtes Dialkylsulfosuccinat ist Natriumdioctylsulfosuccinat.
   Die zur Verbesserung der elektrostatischen Eigenschaften eingesetzten Dialkylsulfosuccinate können als Einzelstoffe oder als Mischungen mehrerer Dialkylsulfosuccinate eingesetzt werden.
   Die Dialkylsulfosuccinate können der Polyurethanzusammensetzung z.B. bei der Herstellung von Polyurethan-Fasern an beliebiger Stelle der Verarbeitung der Zusammensetzung zugesetzt werden. Beispielsweise können die Dialkylsulfosuccinate in Form einer Lösung oder Aufschlämmung zu einer Lösung oder Dispersion von anderen Polyurethan- bzw. PU-Faser-Zusätzen hinzugefügt werden. Sie können bei einer Verarbeitung zu Fasern dann in Bezug auf die Faserspinndüsen stromaufwärts mit der Polymerlösung vermischt oder in diese eingespritzt werden. Natürlich können die Dialkylsulfosuccinate auch getrennt zu der Polymer(spinn)lösung als Wachs, Lösung oder Aufschlammung in einem geeigneten Medium hinzugefügt werden. Die Dialkylsulfosuccinate können weiterhin in den obengenannten Formulierungen bei der gewöhnlichen Polyurethanherstellung zugesetzt werden.
   Die Dialkylsulfosuccinate können bei der Herstellung von Polyurethan-Fasern ebenfalls als Avivage aufgetragen werden. Beispielsweise können die Dialkylsulfosuccinate als wachsartiger Rohstoff oder in Form einer Aufschlammung oder Lösung in einem geeigneten Lösungsmittel in die für die Avivage von Polyurethan-Fasern grundsätzlich bekannten niedrigviskosen Polydialkylsiloxane oder Mineralöle eingearbeitet werden.
   Aufgrund der guten Löslichkeit der Dialkylsulfosuccinate in Polydialkylsiloxanen und Mineralölen können sich homogene Lösungen bilden, die mit der üblichen Präparationstechnik, wie über Präparationsrollen, Fadenführer oder Sprühung auf die Polyurethan-Faser aufgetragen werden können.
   Zur Verbesserung der Löslichkeit der Dialkylsulfosuccinate in Polydialkylsiloxanen kann der Mischung gegebenenfalls ein Mineralöl zugesetzt werden. Solche Mischungen werden bevorzugt eingesetzt.
   Ein weiterer Gegenstand der Erfindung ist daher eine antistatische Zusammensetzung enthaltend wenigstens
D) von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 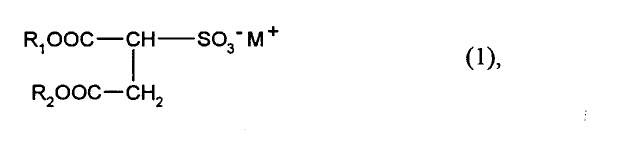 wobei
   - R₁ und R₂: unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
   - M⁺: H⁺, Li⁺, Na⁺, K⁺ oder NH₄⁺ ist,
   und
E) von 85 bis 99,98 Gew.-%, insbesondere von 95 bis 99,95 Gew.-%, insbesondere bevorzugt von 97 bis 99,9 Gew.-% Polyalkysiloxan und/oder alkoxyliertes Polyalkylsiloxan, insbesondere Polydimethylsiloxan und/oder ethoxyliertes Polydimethylsiloxan, mit einer Viskosität von 2 bis 100 mPa·s (bei 25°C), insbesondere von 2,5 bis 50 mPa·s (bei 25°C), insbesondere bevorzugt von 2,5 bis 30 mPa·s (bei 25°C),
   oder Mineralöl mit einer Viskosität von 2 bis 2500 mPa·s (bei 25°C),
   insbesondere von 2,5 bis 2000 mPa·s (bei 25°C), insbesondere bevorzugt von 3 bis 1500 mPa·s (bei 25°C),
   oder einer beliebigen Mischung des unter E) genannten Mineralöls und Polyalkylsiloxans.

Dialkylsulfosuccinate können weiterhin auch in für die Avivage von Polyurethan-Fasern üblichen Präparationen zugesetzt werden, die neben Polydialkylsiloxanen und Mineralölen weitere Hilfsstoffe enthalten, beispielsweise Metallsalze von Fettsäuren, z.B. Mg-, Ca-, Zn-, Al-Salze der Stearinsäure, Ölsäure oder Palmitinsäure, modifizierte Polyorganosiloxane, z.B. verzweigte oder vernetzte Polyorganosiloxane, Fettsäureester oder andere Emulgatoren. Die Präparationen können z.B. in Verbindung mit Fettsäuresalzen auch in Form von Dispersionen vorliegen. Bedingt durch die gute Löslichkeit der Dialkylsulfosuccinate in Polydialkylsiloxanen, hier gegebenenfalls unter Zusatz von Mineralölen, wird der Auftrag dieser Präparationen bei Verbesserung der elektrostatischen Eigenschaften der Polyurethan-Faser nicht verändert und kann mit Hilfe der bestehenden Präparationstechnik erfolgen.

Die erfindungsgemäßen Polyrethanzusammensetzungen oder daraus herstellbaren Polyurethan-Fasern können als Zusatzstoffe C) für verschiedene Zwecke Stoffe wie Mattierungsmittel, Füllstoffe, Antioxidantien, Farbstoffe, Pigmente, Anfärbemittel, Stabilisatoren gegen Wärme, Licht, UV-Strahlung und gegen Dämpfe, enthalten. Diese Zusatzstoffe werden insbesondere so dosiert, daß sie keine dem als internes Additiv eingearbeiteten oder mit der Präparation von außen aufgetragenen Dialkylsulfosuccinat entgegengesetzte Wirkung zeigen.

Beispiele für Antioxidantien, Stabilisatoren gegen Wärme, Licht oder UV-Strahlung sind Stabilisatoren aus der Gruppe der sterisch gehinderten Phenole, HALS-Stabilisatoren (hindered amine light stabilizer), Triazine, Benzophenone und der Benzotriazole. Beispiele für Pigmente und Mattierungsmittel sind Titandioxid, Zinoxid und Bariumsulfat. Beispiele für Farbstoffe sind saure Farbstoffe, Dispersions- und Pigmentfarbstoffe und optische Aufheller.

Die genannten Zusätze werden so dosiert, daß sie keine dem als internes Additiv eingearbeiteten oder mit der Präparation von außen aufgetragenen Dialkylsulfosuccinat entgegengesetzte Wirkungen zeigen.

Die mit Dialkylsulfosuccinat antistatisch ausgerüsteten Polyurethane können neben der Verarbeitung zu Fasern auch für die Herstellung von Formkörpern, Filmen, Elastomeren, Schäumungsmittel u.s.w. eingesetzt werden.

Gegenstand der Erfindung ist ferner ein Verfahren zur Herstellung von antistatisch ausgerüsteten Polyurethanfasern nach dem Schmelzspinn-, Trockenspinn- oder Naßspinnverfahren, insbesondere nach dem Trockenspinn- oder Naßspinnverfahren, das dadurch gekennzeichnet ist, daß der Polyurethanschmelze oder Polyurethanlösung, insbesondere der Polyurethanlösung vor dem Verspinnen der Schmelze oder Lösung zur Polyurethanfaser von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 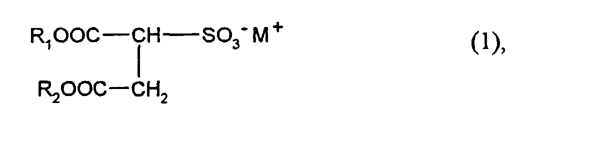 wobei
- R₁ und R₂: unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
- M⁺: H⁺, Li⁺, Na⁺, K⁺ oder NH₄⁺ ist,
zugemischt wird.

Werden weniger als 0,02 Gew.-% der Dialkylsulfosuccinate innerhalb des Filaments oder auf der Filamentoberfläche verteilt, ist die Reduzierung der elektrostatischen Aufladung nicht immer zufriedenstellend. Die Einarbeitung von mehr als 15 Gew.-% der Dialkylsulfosuccinate innerhalb des Filaments kann zu nachteiligen physikalischen Eigenschaften der Faser führen und ist daher nicht empfehlenswert.

Neben der Einarbeitung der Dialkylsulfosuccinate in die Polyurethan-Fasern durch Eintrag in die Polyurethanzusammensetzung können die Dialkylsulfosuccinate zur Verbesserung des elektrostatischen Verhaltens der Polyurethan-Faser zusätzlich von außen, beispielsweise in Kombination mit der Präparation, aufgetragen werden.

Eine unabhängige Variante des Verfahrens zur Herstellung von antistatisch ausgerüsteten Polyurethanfasern nach dem Schmelzspinn-, Trockenspinn- oder Naßspinnverfahren, insbesondere nach dem Trockenspinn- oder Naßspinnverfahren ist dadurch gekennzeichnet, daß der gesponnenen und verfestigten Polyurethanfaser ein Präparationsöl enthaltend
von 0,02 bis 15 Gew.-%, insbesondere von 0,05 bis 5 Gew.-%, insbesondere bevorzugt von 0,1 bis 3 Gew.-% Diakylsulfosuccinat entsprechend der allgemeinen Formel (1) 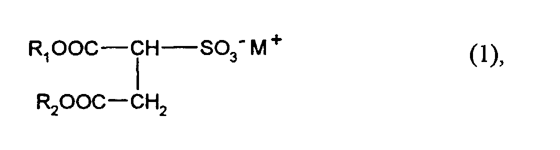 wobei
- R₁ und R₂: unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
- M⁺: H⁺, Li⁺, Na⁺, K⁺ oder NH₄⁺ ist,
als Außenauftrag an einer Präparationsstelle auf die Faser aufgebracht wird.

Die Herstellung der erfindungsgemäßen antistatischen Zusammensetzung erfolgt z.B. durch die Zugabe und Lösen einer wirksamen Menge der Dialkylsulfosuccinate von 0,02 Gew.-% bis 15 Gew.-%, vorzugsweise einer Menge von 0,05 Gew.-% bis 5 Gew.-% und besonders bevorzugt einer Menge von 0,10 Gew.-% bis 3 Gew.-%, bezogen auf das Gewicht der Präparation, zu Polyakylsiloxan bevorzugt Polydimethylsiloxan mit einer Viskosität von 2 bis 100 mPas (25°C), bevorzugt mit einer Viskosität von 2,5 bis 50 mPas (25°C) und besonders bevorzugt mit einer Viskosität von 2,5 bis 30 mPas (25°C). Zur Verbesserung der Löslichkeit von Dialkylsulfosuccinat im Präparationsöl können Polyalkylsiloxane durch Mineralöl mit einer Viskosität von 2 bis 2500 mPas (25°C), bevorzugt mit einer Viskosität von 2,5 bis 2000 mPas (25°C) und besonders bevorzugt mit einer Viskosität von 3 bis 1500 mPas (25°C) ersetzt werden oder Mineralöle in einer Menge von 0,1 Gew.-% bis 95 Gew.-%, vorzugsweise einer Menge von 0,3 Gew.-% bis 50 Gew.-% und besonders bevorzugt einer Menge von 0,5 Gew.-% bis unter 25 Gew.-%, bezogen auf das Gewicht der Präparation, zugesetzt werden. Die Präparation kann weiterhin weitere für die Avivage von Polyurethan-Fasern bekannte Zusätze enthalten, wie beispielsweise Metallsalze von Fettsäuren mit Kleiner oder gleich 5 Gew.-%, modifizierte Polyorganosiloxane mit kleiner oder gleich 15 Gew.-% und Fettsäureester mit Kleiner oder gleich 30 Gew.-%, bezogen auf das Gewicht der Präparation. Das Mineralöl ist weiter charakterisiert durch eine Dichte von 805 bis 910 kg/m³ (15°C) und eine Viskositäts-Dichte-Konstante (VDK, Bestimmung nach DIN 51 378) von 0,770 bis 0,825.

Die Präparation wird mit einer Menge von 1 bis 15 Gew.-%, vorzugsweise mit einer Menge von 2 bis 10 Gew.-% und besonders bevorzugt mit einer Menge von 3 bis 8 Gew.-%, bezogen auf das Gewicht der Faser, aufgetragen.

Die erfindungsgemäßen Polyurethan-Fasern bestehen aus segmentierten Polyurethanpolymeren, beispielsweise solchen, die auf Polyethern, Polyestern, Polyetherestern, Polycarbonaten oder Mischungen davon basieren. Derartige Fasern können nach grundsätzlich bekannten Verfahren hergestellt werden, wie beispielsweise nach denjenigen, die in den Schriften US 2 929 804, US 3 097 192, US 3 428 711, US 3 553 290 und US 3 555 115 und in der Schrift WO 9 309 174 beschrieben werden. Ferner können die Polyurethan-Fasern aus thermoplastischen Polyurethanen bestehen, deren Herstellung beispielsweise in der Schrift US 5 565 270 beschrieben ist. Alle diese Polymeren können bei der Verarbeitung der Fasern zu Miederwaren oder Badebekleidung durch eine Kettwirkverarbeitung Verdrallungen der Fadenscharen aufgrund elektrostatischer Aufladung zeigen, wenn sie nicht oder mit herkömmlichen Antistatika ausgerüstet sind. Die antistatisch ausgerüsteten Fasern umfassen daher erfindungsgemäß sämtliche genannten Polymere.

Bei den Dialkylsulfosuccinaten handelt es sich um Additive, die in die Polyurethan-Faser eingearbeitet und/oder mit der Präparation von außen aufgetragen werden können. Überraschend wurde gefunden, daß Dialkylsulfosuccinate in den für die Präparierung von Polyurethan-Fasern üblichen Ölen wie Polydialkylsiloxanen und/oder Mineralölen so gut löslich sind, daß eine homogene Lösung gebildet werden kann und bereits bei Zusatz geringer Mengen eine deutliche Verbesserung der elektrostatischen Eigenschaften bewirken, ohne daß weitere Salze, beispielsweise Alkanolammoniumsalze, Alkali- oder Erdalkalihalogenide zugesetzt werden müssen. Sie können mit der Präparation über bekannte Präparationstechnik, beispielsweise mittels Präparationsrollen, Fadenführer oder Sprühung, als Außenauftrag verarbeitet werden. Dialkylsulfosuccinate enthalten keine Schwermetalle und sind aus toxikologischer und ökotoxikologischer Sicht unbedenklich und daher bevorzugt geeignet. Bei der Weiterverarbeitung der Elastan-Fasern, z.B. der Färbung entstehen keine Abwasser, die eine hohe Salzfracht haben und die Funktionsweise einer biologisch arbeitenden Kläranlage mindern oder sogar zerstören können.

Durch die Einarbeitung und/oder den Auftrag der Dialkylsulfosuccinate mit der Präparation auf Polyurethan-Fasern wird weiterhin, wie in den nachfolgenden Beispielen gezeigt, erreicht, daß die elektrostatischen Eigenschaften der behandelten Polyurethan-Fasern, beispielsweise ihr Durchgangswiderstand, deutlich verbessert werden. Die Erniedrigung des Durchgangswiderstands ist dabei unabhängig von einer Einarbeitung in die Polyurethanzusammensetzung oder einem Außenauftrag mit einer Präparation erreichbar. Die Messung des Durchgangswiderstands ist dabei ein Maß für das elektrostatische Verhalten der Polyurethan-Fasern. Durch die Reduzierung des Durchgangswiderstands wird es möglich, das elektrostatische Verhalten der Polyurethan-Fasern zu verbessern. Hierdurch bedingt wird die Verdrallung von Fadenscharen bei der Kettwirkverarbeitung unterdrückt. Maschinenstillstand bei der Kettwirkverarbeitung kann durch die erfindungsgemäßen Polyurethan-Fasern verhindert und der Verarbeitungsprozeß in seiner Geschwindigkeit und der damit verknüpften Produktivität erhöht werden.

Die Polyurethane der erfindungsgemäßen Polyurethanzusammensetzung als auch der Polyurethanfasern, zu denen auch segmentierte Polyurethane gehören, können insbesondere aus einem linearen Homo- oder Copolymer mit je einer Hydroxygruppe am Ende des Moleküls und einem Molekulargewicht von 600 bis 4000 g/mol, wie Polyetherdiole, Polyesterdiole, Polyesteramidodiole, Polycarbonatdiole, Polyacryldiole, Polythioesterdiole, Polythioetherdiole, Polyhydrocarbondiole oder aus einer Mischung bzw. aus Copolymeren dieser Gruppe hergestellt werden. Weiterhin basiert das Polyurethan insbesondere auf organischen Diisocyanaten und einem Kettenverlängerer mit mehreren aktiven Wasserstoffatomen, wie z.B. Di- und Polyolen, Di- und Polyaminen, Hydroxylaminen, Hydrazinen, Polyhydraziden, Polysemicarbaziden, Wasser oder einer Mischung aus diesen Komponenten. Beispiele für Diole sind Ethylenglykol, 1,2-Propandiol, Butandiol oder Hexandiol. Beispiele für Diamine sind Ethylendiamin, 1,2-Propandiamin, 2-Methyl-1,5-diaminopentan, 1,3-Diaminocyclohexan, 1-Methyl-2,4-diaminocyclohexan oder 1,2-Diaminocyclohexan.

Die Dialkylsulfosuccinate können zusammen oder getrennt mit anderen häufig eingesetzten Zusatzstoffen C) wie UV-Stabilisatoren, Antioxidantien, Schadgasstabilisatoren, Anfärbezusätzen, Gleitmitteln, Farbstoffen, Füllstoffen, Mattierungsmitteln usw. in die erfindungsgemäßen Polyurethanzusammensetzungen eingearbeitet werden. Darüber hinaus können Dialkylsulfosuccinate von außen, z.B. zusammen mit einer Avivage, auf die Polyurethane aufgetragen werden.

Die erfindungsgemäßen Polyurethanfasern können zur Herstellung von elastischen Geweben, Gestricken, Gewirken u.a. textilen Waren verwendet werden, insbesondere solche für die Anwendung im Bereich Badebekleidung.

Die erfindungsgemäße Präparation ist in ihrer Verwendung nicht nur auf Polyurethanfasern beschränkt und kann generell zur antistatischen Beschichtung von Polymeren eingesetzt werden.

Die erfindungsgemäßen antistatischen Polyurethanzusammensetzungen können zu Formkörpern, Folien, Bändern und, wie beschrieben, auch zu Fasern verarbeitet werden.

Das nachfolgend beschriebene Testverfahren wird zum Messen der elektrischen Eigenschaften der Polymere verwendet.

Die Veränderung der elektrischen Leitfähigkeit der Polyurethanzusammensetzungen wird durch die in der DIN 54 345 beschriebenen Messung des Durchgangswiderstands bestimmt.

Die Erfindung wird nachfolgend durch die Beispiele, welche jedoch keine Beschränkung der Erfindung darstellen, weiter erläutert.

Aus den angegebenen Beispielen geht hervor, daß durch Zugabe von Dialkylsulfosuccinaten in Polyurethane oder auf deren Oberfläche der Durchgangswiderstand stark reduziert wird. Die Wirksamkeit der Dialkylsulfosuccinate ist dabei deutlich besser als die anderer Substanzen, wie Phosphorsäureester oder Polyamylsiloxan. Vergleichsbeispiele zur Gegenüberstellung der erfindungsgemäßen Präparation mit einem Präparationsmittel auf Basis von Aminopolysiloxanen (EP 493 766 A1) konnten nicht durchgeführt werden, da wegen der Toxizität der Aminopolysiloxane, die Versuchsapparatur mit erheblichem technischem Aufwand hätte verkapselt werden müssen. Bedingt durch die starke Reduzierung des elektrischen Durchgangswiderstands und der damit einhergehenden Verbesserung des elektrostatischen Verhaltens der Polyurethane kann z.B. bei der Kettwirkverarbeitung von elastischen Polyurethanfasern eine elektrostatische Aufladung verhindert und damit der Verarbeitungsprozeß verbessert werden.

### Beispiel 1:

In diesem Beispiel wird die Wirksamkeit von Dialkylsulfosuccinaten als Antistatikum in Polyurethanzusammensetzungen gezeigt, die auf Basis von Polyetherdiolen hergestellt werden. Die als Antistatikum wirksamen Dialkylsulfosuccinate werden dabei der Polyurethanzusammensetzung als internes Additiv zugesetzt.

Die Polyurethanzusammensetzung wird aus einem Polyetherdiol, bestehend aus Polytetrahydrofuran (PTHF) mit einem durchschnittlichen Molekulargewicht von 2000 g/mol hergestellt. Das Molgewicht ist auf das Zahlenmittel bezogen. Das Diol wird mit Methylen-bis(4-phenyldiisocyanat) (MDI) mit einem molaren Verhältnis von 1 zu 1,8 gekappt und anschließend mit einem Gemisch aus Ethylendiamin (EDA) und Diethylamin (DEA) im Gewichtsverhältnis 97:3 in Dimethylacetamid kettenverlängert. (Das Verhältnis der Menge von Kettenverlängerer und Kettenabbrecher zu nicht reagiertem Isocyanat im Präpolymeren beträgt in allen Beispielen 1,075.)

Danach wird den Polymeren ein Stammansatz von Additiven beigemischt. Dieser Stammansatz besteht aus 62,6 Gew.-% Dimethylacetamid (DMAC), 10,3 Gew.-% Cyanox 1790 (1,3,5-Tris(4-tert.-butyl-3-hydroxy-2,5-dimethylbenzyl)-1,3,5-triazin-2,4,6-(1H,3H,5H)-trion, Fa. American Cyanamid), 27,0 Gew.-% 30%iger Spinnlösung und 0,001 Gew.-% des Farbstoffs Makrolexviolett (Fa. Bayer AG). Dieser Stammansatz wird der Polyurethanzusammensetzung so zugefügt, daß der Gehalt an Cyanox 1790 1,0 Gew.-%, bezogen auf den gesamten Feststoffgehalt, beträgt.

Dieser Polyurethanzusammensetzung wird ein zweiter Stammansatz zugemischt, bestehend aus 30,9 Gew.-% Titandioxid Typ RKB 2 (Fa. Bayer AG), 44,5 Gew.-% DMAC und 24,6 Gew.-% 30%iger Spinnlösung, in der Art, daß in dem fertigen Polyurethan ein Titandioxidgehalt von 0,05 Gew.-%, bezogen auf das Polyurethan-Harnstoff-Polymere, resultiert.

Dieser Polyurethanzusammensetzung wird nun ein dritter Stammansatz zugemischt. Dieser besteht aus 5,5 Gew.-% Silwet L 7607 (Polyalkoxy-modifiziertes Polydimethylsiloxan; Viskosität: 50 mPas (bei 25°C), Molekulargewicht 1000 g/mol, Fa. OSI Specialties), 5,5 Gew.-% Magnesium-Stearat, 45,0 Gew.-% DMAC und 44,0 Gew.-% einer 30%igen Spinnlösung und wird so zugesetzt, daß ein Magnesium-Stearat-Gehalt von 0,25 Gew.-%, bezogen auf den Feststoff der Polyurethan-Harnstoff-Polymere, resultiert.

Dieser Polyurethanzusammensetzung wird ein vierter Stammansatz zugemischt, bestehend aus 15,0 Gew.-% der in Tabelle 1 angegebenen Dialkylsulfosuccinate, 54,0 Gew.-% Dimethylacetamid und 31,0 Gew.-% einer 30%igen Spinnlösung, in der Art, daß in der fertigen Polyurethanzusammensetzung der in Tabelle 1 angegebene Gehalt an Dialkylsulfosuccinat, bezogen aufdas Polyurethan-Harnstoff-Polymere, resültiert.

Aus der Polyurethanzusammensetzung wird mit einem Rakel ein Film gezogen. Das Lösungsmittel wird in einem Umluft-Trockenschrank bei einer Temperatur von 100°C über 2h verdampft. Der fertige Film hat eine Schichtdicke von 1 mm.

Die Ergebnisse der Messungen des Durchgangswiderstands sind in Tabelle 1 aufgeführt. Es zeigt sich, daß durch den Zusatz von bereits 0,1 Gew.-% Natrium-dioctylsulfosuccinat zu der Polyurethanzusammensetzung der Durchgangswiderstand deutlich verringert wird und damit die Wirksamkeit als Antistatikum belegt. Durch den Zusatz größerer Mengen des Antistatikums zur Polyurethanzusammensetzung wird der Durchgangswiderstand weiter reduziert und damit die Wirksamkeit als Antistatikum erhöht.

**Tabelle 1**

| Experiment | Dialkylsuccinat | Gehalt Dialkylsuccinat im Film Gew.-% | Durchgangswiderstand (10⁹ Ohm) [Meßgleichspannung: 100 V] |
|---|---|---|---|
| 1a | Natrium-dioctylsulfosuccinat | 0 | 6,3 |
| 1b | Natrium-dioctylsulfosuccinat | 0,1 | 0,45 |
| 1c | Natrium-dioctylsulfosuccinat | 0,3 | 0,16 |
| 1d | Natrium-dioctylsulfosuccinat | 1 | 0,12 |

### Beispiel 2:

In diesem Beispiel wird die Wirksamkeit von Dialkylsulfosuccinaten als Antistatikum in Polyurethanzusammensetzungen gezeigt, die auf Basis von Polyesterdiolen hergestellt werden. Die als Antistatikum wirksamen Dialkylsulfosuccinate werden dabei der Polyurethanzusammensetzung als internes Additiv zugesetzt.

Die Polyurethanzusammensetzung wird aus einem Polyesterdiol, bestehend aus 30,5 Gew.-% 1,6-Hexandiol, 14,5 Gew.-% Neopentylglycol und 55,0 Gew.-% Adipinsäure mit einem durchschnittlichen Molekulargewicht von 2000 g/mol (bezogen auf das Zahlenmittel) hergestellt. Das Diol wird mit Methylen-bis(4-phenyldiisocyanat) (MDI) mit einem molaren Verhältnis von 1 zu 1,85 gekappt und anschließend mit einem Gemisch aus Ethylendiamin (EDA) und Diethylamin (DEA) (Gewichtsverhältnis 98:2) in Dimethylacetamid kettenverlängert.

Die Zugabe der Stammansätze und die Herstellung der Filme erfolgt in gleicher Weise wie bereits in Beispiel 1 beschrieben.

Die der Polyurethanzusammensetzung zugesetzten Mengen an Dialkylsulfosuccinat in Bezug auf das Polyurethan-Harnstoff-Polymere sind in Tabelle 2 angegeben. Es zeigt sich, daß durch den Zusatz geringer Mengen Natrium-dioctylsulfosuccinat der Durchgangswiderstand der Polyurethanzusammensetzung stark reduziert und damit die Wirksamkeit als Antistatikum belegt wird. In einem Vergleichsexperiment wird weiterhin gezeigt, daß die Wirksamkeit von Dialkylsulfosuccinaten als Antistatikum im Vergleich zu der von Phosphorsäureestern deutlich erhöht ist.

**Tabelle 2**

| Experiment | Dialkylsuccinat | Gehalt im Film Gew.-% | Durchgangswiderstand (10⁹ Ohm) 100 V** |
|---|---|---|---|
| 2a | Natrium-dioctylsulfosuccinat | 0 | 10 |
| 2b | Natrium-dioctylsulfosuccinat | 1 | 0,9 |
| 2c (Vergleich) | Phosphorsäureester* | 1,2 | 5 |

| | | | |
|---|---|---|---|
| * Präparation DEZ 2, Hersteller Fa. Bayer AG; | | | |
| ** Meßgleichspannung | | | |

### Beispiel 3:

In diesem Beispiel wird die Wirksamkeit von Dialkylsulfosuccinaten als Antistatikum in Polyurethan-Fasern gezeigt, die auf Basis von Polyetherdiolen hergestellt werden. Die als Antistatikum wirksamen Dialkylsulfosuccinate werden dabei als Additiv mit der Präparation auf die Polyurethan-Faser aufgetragen.

Die Polyurethan-Fasern werden aus einem Polyetherdiol, bestehend aus Polytetrahydrofuran (PTHF) mit einem durchschnittlichen Molekulargewicht von 2000 g/mol (bezogen auf das Zahlenmittel) hergestellt. Das Diol wird mit Methylen-bis(4-phenyldiisocyanat) (MDI) mit einem molaren Verhältnis von 1 zu 1,7 gekappt und dann mit einem Gemisch aus Ethylendiamin (EDA) und Diethylamin (DEA) (Gewichtsverhältnis 97:3) in Dimethylacetamid kettenverlängert.

Danach werden der Spinnlösung die bereits in Beispiel 1 beschriebenen Stammansätze 1 und 2 zugemischt. In Stammansatz 3 wird anstelle von Silwet L 7607 Dimethylacetamid eingesetzt. Der so hergestellte Stammansatz wird der Spinnlösung ebenfalls zugemischt.

Die fertige Spinnlösung wird durch Spinndüsen in einer für einen Trockenspinnprozeß typischen Spinnapparatur zu Filamenten mit einem Titer von 11 dtex trocken versponnen, wobei jeweils vier Einzelfilamente zu koaleszierenden Filamentgarnen zusammengefaßt werden. Die Faserpräparation, bestehend aus den in Tabelle 3 angegebenen Präparationsölen, wird über eine Präparationswalze aufgetragen, wobei 4 Gew.-% bezogen auf das Gewicht der Polyurethan-Faser appliziert werden. Die Polyurethan-Faser wird anschließend mit einer Geschwindigkeit von 800 m/min aufgewickelt.

Die dem Präparationsöl für Polyurethan-Fasern auf Basis von Polyetherdiolen zugesetzten Mengen an Dialkylsulfosuccinaten und der resultierende Durchgangswiderstand der Polyurethan-Fasern nach der Avivierung mit verschiedenen Präparationsölen sind in Tabelle 3 angegeben. Es zeigt sich, daß der Durchgangswiderstand von Polyurethan-Fasern nach einer Avivierung mit einem Silikonöl vergleichsweise hoch ist und damit verknüpft keine antistatische Ausrüstung vorhanden ist. Dieses gilt auch für das Präparationsöl Silicone Y 7769, welches einen Anteil von 10 Gew.-% Polyamylsiloxan enthält. Bereits der Zusatz geringer Mengen von Dialkylsulfosuccinaten zu den Präparationsölen bewirkt in jedem Falle eine starke Reduzierung des Durchgangswiderstandes der Polyurethan-Fasern. Hiermit wird die Wirksamkeit von Dialkylsulfosuccinat als Antistatikum belegt.

**Tabelle 3**

| Experiment | Zusammensetzung der Präparation/Gew.-% | | | Durchgangswiderstand (10¹¹Ohm) | |
|---|---|---|---|---|---|
| | Silikonöl % | Paraffin | Natrium-dioctylsulfosuccinat | 100 V* | 1000 V* |
| 3a | 100** | 0 | 0 | 4 | 4 |
| 3b | 93,5** | 6+ | 0,5 | 1,6 | 1,5 |
| 3c | 92** | 6+ | 2 | 1 | 1,2 |
| 3d | 100++ | 0 | 0 | 3,5 | 3,2 |
| 3e | 89,5++ | 10+ | 0,5 | 3 | 3 |
| 3f | 78++ | 20+ | 2 | 2,5 | 2 |

| | | | | | |
|---|---|---|---|---|---|
| * Meßgleichspannung; | | | | | |
| ** Silicone Y 7769, Hersteller: Fa. OSI Specialties; | | | | | |
| + BP Enerpar M 2520, Hersteller: Fa. BP Oil; | | | | | |
| ++ Baysilone-Öl M20, Hersteller: Fa. Bayer AG | | | | | |

### Beispiel 4:

In diesem Beispiel wird die Wirksamkeit von Dialkylsulfosuccinaten als Antistatikum in Polyurethan-Fasern gezeigt, die auf Basis von Polyesterdiolen hergestellt werden. Die als Antistatikum wirksamen Dialkylsulfosuccinate werden dabei wie in Beispiel 3 als Additiv mit der Präparation auf die Polyurethan-Faser aufgetragen.

Die Polyurethan-Fasern werden aus einem Polyesterdiol, bestehend aus 30,5 Gew.-% 1,6-Hexandiol, 14,5 Gew.-% Neopentylglycol und 55,0 Gew.-% Adipinsäure mit einem durchschnittlichen Molekulargewicht von 2000 g/mol (bezogen auf das Zahlenmittel) hergestellt. Das Diol wird mit Methylen-bis(4-phenyldiisocyanat) (MDI) mit einem molaren Verhältnis von 1 zu 1,85 gekappt und anschließend mit einem Gemisch aus Ethylendiamin (EDA) und Diethylamin (DEA) (Gewichtsverhältnis 98:2) in Dimethylacetamid kettenverlängert.

Danach werden der Spinnlösung die bereits in Beispiel 1 beschriebenen Stammansätze 1 und 2 zugemischt. In Stammansatz 3 wird anstelle von Silwet L 7607 Dimethylacetamid eingesetzt. Der so hergestellte Stammansatz wird der Spinnlösung ebenfalls zugemischt.

Die fertige Spinnlösung wird wie in Beispiel 3 beschrieben durch einen Trockenspinnprozeß versponnen. Die Polyurethan-Faser wird anschließend mit einer Geschwindigkeit von 800 m/min aufgewickelt.

Die dem Präparationsöl für Polyurethan-Fasern auf Basis von Polyesterdiolen zugesetzten Mengen an Dialkylsulfosuccinaten und der resultierende Durchgangswiderstand der Polyurethan-Fasern nach der Avivierung mit verschiedenen Präparationsölen sind in Tabelle 4 angegeben. Es zeigt sich, daß der Durchgangswiderstand von Polyurethan-Fasern nach der mit Avivierung mit Silikonölen hoch ist und damit verknüpft keine antistatische Ausrüstung vorhanden ist. Dieses gilt auch für das Präparationsöl Silicone Y 7769, welches einen Anteil von 10 Gew.-% Polyamylsiloxan enthält. Bereits der Zustatz geringer Mengen von Dialkylsulfosuccinaten bewirkt in jedem Fall eine starke Reduzierung der Durchgangswiderstände der Polyurethan-Fasern. Hiermit wird wiederum die Wirksamkeit von Dialkylsulfosuccinaten als Antistatikum belegt.

**Tabelle 4**

| Experiment | Zusammensetzung der Präparation/Gew.-% | | | Durchgangswiderstand (10¹¹ Ohm) | |
|---|---|---|---|---|---|
| | Silikonöl | Paraffin | Natrium-dioctylsulfosuccinat | 100 V* | 1000 V* |
| 4a | 100** | 0 | 0 | 9 | 9,5 |
| 4b | 93,5** | 6+ | 0,5 | 5 | 5 |
| 4c | 92** | 6+ | 2 | 4 | 4 |
| 4d | 100++ | 0 | 0 | 3,8 | 3,6 |
| 4e | 89,5++ | 10+ | 0,5 | 2,7 | 2,7 |
| 4f | 78++ | 20+ | 2 | 1,7 | 1,7 |

| | | | | | |
|---|---|---|---|---|---|
| * Meßgleichspannung; | | | | | |
| ** Silicone Y 7769, Hersteller: Fa. OSI Specialties; | | | | | |
| + BP Enerpar M 2520, Hersteller: Fa. BP Oil; | | | | | |
| ++ Baysilone-Öl M20, Hersteller: Fa. Bayer AG. | | | | | |

## Patentansprüche

1. Polyurethanzusammensetzung mit einem verbesserten antistatischen Verhalten, dadurch gekennzeichnet, daß sie aus
A) von 99,98 bis 65 Gew.-%, insbesondere von 99,95 bis 80 Gew.-%, insbesondere bevorzugt von 99,9 bis 85 Gew.-% Polyurethan,
B) von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 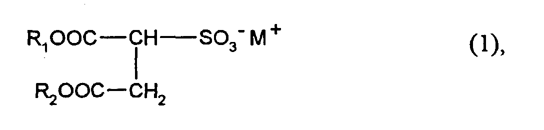 wobei
R₁ und R₂ unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
M⁺ ein Kation der Reihe H⁺, Li⁺, Na⁺, K⁺ oder NH₄⁺ ist,
und
C) von 0 bis 20 Gew.-%, insbesondere von 0 bis 15 Gew.-% Zusatzstoffe besteht.

2. Antistatische Zusammensetzung enthaltend wenigstens
D) von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 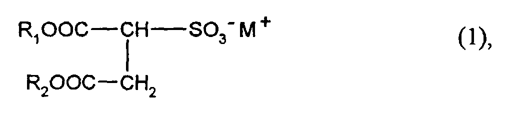 wobei
R₁ und R₂ unabhängig voneinander gleich oder verschieden für Wasserstoff oder eine Alkylgruppe mit 1 bis 30 Koblenstoffatomen, und bevorzugt für eine Alkylgruppe mit 4 bis 18 Kohlenstoffatomen stehen und
M⁺ ein Kation der Reihe H⁺, Li⁺, Na⁺, K⁺ oder NH₄⁺ ist und
E) von 85 bis 99,98 Gew.-%, insbesondere von 95 bis 99,95 Gew.-%, insbesondere bevorzugt von 97 bis 99,9 Gew.-%
Polyalkysiloxan und/oder alkoxyliertes Polyalkylsiloxan, insbesondere Polydimethylsiloxan und/oder ethoxyliertes Polydimethylsiloxan, mit einer Viskosität von 2 bis 100 mPa·s (bei 25°C), insbesondere von 2,5 bis 50 mPa·s (bei 25°C), insbesondere bevorzugt von 2,5 bis 30 mPa·s (bei 25°C),
oder Mineralöl mit einer Viskosität von 2 bis 2500 mPa·s (bei 25°C), insbesondere von 2,5 bis 2000 mPa·s (bei 25°C), insbesondere bevorzugt von 3 bis 1500 mPa·s (bei 25°C),
oder einer beliebigen Mischung des genannten Mineralöl und Polyalkylsiloxans.

3. Antistatisch ausgerüstete Polyurethanfasern auf Basis von thermoplastischem Polyurethan oder einem Polymeren mit wenigstens 85 Gew.-% segmentiertem Polyurethan enthaltend
von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 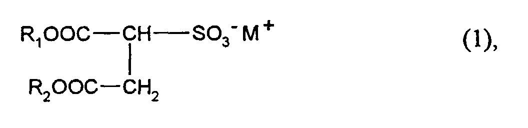 wobei
R₁ und R₂ unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
M⁺ ein Kation der Reihe H⁺, Li⁺, Na⁺, K⁺ oder NH₄⁺ ist,
insbesondere fein dispergiert, innerhalb der Faser und/oder auf der Faseroberfläche verteilt.

4. Verfahren zur Herstellung von antistatisch ausgerüsteten Polyurethanfasern nach dem Schmelzspinnverfahren durch Herstellung der Spinnschmelze, Verspinnung der Schmelze, Fadenbildung unterhalb einer Spinndüse durch Kühlung der Fäden, gegebenenfalls Verstreckung der gebildeten Fäden, Präparieren und Aufwickeln der Fäden, dadurch gekennzeichnet, daß der Polyurethanschmelze vor dem Verspinnen der Schmelze zur Polyurethanfaser
von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 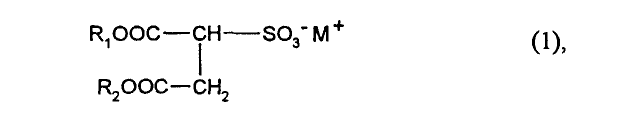 wobei
R₁ und R₂ unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
M^{**+**} ein Kation der Reihe H⁺, Li⁺, Na⁺, K⁺ oder NH₄⁺ ist,
zugemischt wird.

5. Verfahren zur Herstellung von antistatisch ausgerüsteten Polyurethanfasern nach dem Trockenspinn- oder Naßspinnverfahren durch Herstellen der Spinnlösung Verspinnen der Spinnlösung mit einer Spinndüse, Fadenbildung unterhalb der Spinndüse durch Entfernen des Spinnlösungsmittels durch Trocknen oder in einem Fällbad, Präparieren und Aufwickeln der Fäden, dadurch gekennzeichnet, daß der Polyurethanlösung vor dem Verspinnen der Lösung zur Polyurethanfaser
von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 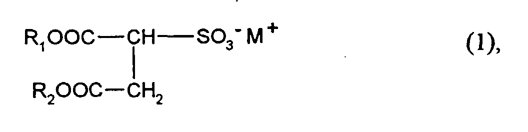 wobei
R₁ und R₂ unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
M⁺ ein Kation der Reihe H^{+,} Li⁺, Na⁺, K⁺ oder NH₄⁺ ist,
zugemischt wird.

6. Verfahren zur Herstellung von antistatisch ausgerüsteten Polyurethanfasern nach dem Schmelzspinnverfahren durch Herstellen der Spinnschmelze, Verspinnen der Schmelze mit einer Spinndüse, Fadenbildung unterhalb der Spinndüse durch Kühlung der gebildeten Fäden, Präparieren und Aufwickeln der Fäden, dadurch gekennzeichnet, daß auf der gesponnenen und verfestigten Polyurethanfaser ein Präparationsöl enthaltend
von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 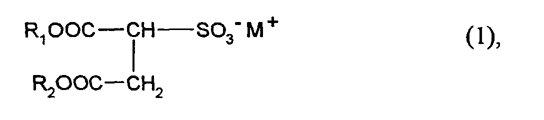 wobei
R₁ und R₂ unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
M⁺ ein Kation der Reihe H⁺, Li⁺, Na⁺, K⁺ oder NH₄⁺ ist,
als Außenauftrag an einer Präparationsstelle aufgebracht wird.

7. Verfahren zur Herstellung von antistatisch ausgerüsteten Polyurethanfasern nach dem Trockenspinn- oder Naßspinnverfahren durch Herstellen der Spinnlösung, Verspinnen der Lösung mit einer Spinndüse, Fadenbildung unterhalb der Spinndüse durch Entfernen des Spinnlösungsmittels durch Trocknen oder in einem Fällbad, Präparieren und Aufwickeln der Fäden, dadurch gekennzeichnet, daß auf der gesponnenen und verfestigten Polyurethanfaser ein Präparationsöl enthaltend
von 0,02 bis 15 Gew.-%, insbesondere von 0,05 bis 5 Gew.-%, insbesondere bevorzugt von 0,1 bis 3 Gew.-% Dialkylsulfosuccinat entsprechend der allgemeinen Formel (1) 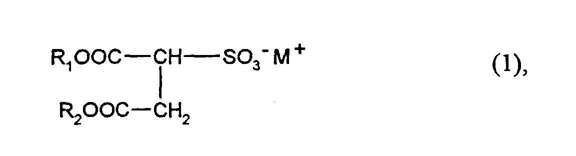 wobei
R₁ und R₂ unabhängig voneinander gleich oder verschieden für Wasserstoff oder eine Alkylgruppe mit 1 bis 30 Kohlenstoffatomen, und bevorzugt für eine Alkylgruppe mit 4 bis 18 Kohlenstoffatomen stehen und
M⁺ ein Kation der Reihe H⁺, Li⁺, Na⁺, K⁺ oder NH₄⁺ ist,
als Außenauftrag an einer Präparationsstelle aufgebracht wird.

8. Verfahren nach einem der Ansprüche 6 oder 7, dadurch gekennzeichnet, daß das Präparationsöl mit dem Dialkylsulfosuccinat die antistatische Zusammensetzung nach Anspruch 2 ist.
